# EUROPÄISCHE PATENTSCHRIFT

(11) **EP 1 933 172 B1**
(45) Veröffentlichungstag und Bekanntmachung des Hinweises auf die Patenterteilung: **05.10.2011**
(21) Anmeldenummer: 07023616.1
(22) Anmeldetag: 06.12.2007
(51) Int. Cl.: G01V 8/14

(54) **Lichtschrankenanordnung**
Light barrier assembly
Agencement de barrière lumineuse

(30) Priorität: 16.12.2006 DE 102006059547
(43) Veröffentlichungstag der Anmeldung: 18.06.2008
(73) Patentinhaber: Leuze electronic GmbH + Co. KG, 73277 Owen/Teck (DE)
(72) Erfinder: Haberl, Paul, 80999 München (DE); Tull, Andreas, 82205 Gilching (DE)
(74) Vertreter: Ruckh, Rainer Gerhard

(56) Entgegenhaltungen:
- EP-A- 0 097 317
- EP-A- 0 369 386
- EP-A- 1 180 697
- EP-A- 1 296 161
- EP-A- 1 496 374
- DE-A1-102004 022 408

## Beschreibung

Die Erfindung betrifft eine Lichtschrankenanordnung gemäß dem Oberbegriff des Anspruchs 1.

Derartige Lichtschrankenanordnungen dienen generell zur Erfassung von Objekten innerhalb eines Überwachungsbereichs.

Derartige Lichtschrankenanordnungen bilden generell mehrstrahlige Lichtschrankensysteme, mittels derer ein Eindringen von Objekten in einen flächigen, vorzugsweise in einer Ebene verlaufenden Überwachungsbereich überwacht werden kann. Die Lichtschrankenanordnung weist hierzu in zwei Gehäusen integrierte Optikelemente auf, die von wenigstens einem Sendelichtstrahlen emittierenden Sender, wenigstens einem Sendelichtstrahlen empfangenden Empfänger und ggf. einer vorgegebenen Anzahl von Umlenkspiegeln gebildet sind. Die beiden Gehäuse sind an gegenüberliegenden Rändern des Überwachungsbereichs angeordnet. Die Optikelemente sind innerhalb der Gehäuse so angeordnet, dass die Sendelichtstrahlen der Lichtschrankenanordnung entlang mehrerer, vorzugsweise parallel und in Abstand zueinander verlaufender Strahlachsen innerhalb des Überwachungsbereichs geführt sind. Ein Objekt gilt dabei dann als erkannt, wenn die Sendelichtstrahlen wenigstens einer Strahlachse unterbrochen sind.

Gemäß einer ersten Variante kann die Lichtschrankenanordnung den Aufbau eines Lichtgitters aufweisen. In diesem Fall sind in einem ersten Gehäuse der Lichtschrankenanordnung als Optikelemente mehrere Sender integriert, während im zweiten Gehäuse als Optikelemente mehrere Empfänger angeordnet sind. In diesem Fall werden die von den im ersten Gehäuse integrierten Sendem emittierten Sendelichtstrahlen jeweils entlang einer Strahlachse durch den Überwachungsbereich zu einem zugeordneten Empfänger im zweiten Gehäuse geführt.

Gemäß einer zweiten Variante sind sämtliche von Sendern und Empfängern gebildete aktiven Optikelemente in einem ersten Gehäuse der Lichtschrankenanordnung integriert, während im zweiten Gehäuse nur passive Optikelemente in Form von Umlenkspiegeln vorgesehen sind. In diesem Fall erfolgt die Strahlführung der Sendelichtstrahlen derart, dass die von einem Sender emittierten Sendelichtstrahlen ein erstes Mal den Überwachungsbereich durchsetzen, dann auf einen ersten Umlenkspiegel im zweiten Gehäuse treffen, von dort umgelenkt und innerhalb des Gehäuses zu einem zweiten Umlenkspiegel geführt werden. Am zweiten Umlenkspiegel werden dann die Sendelichtstrahlen so abgelenkt, dass sie ein zweites Mal den Überwachungsbereich durchsetzen und dann auf einen Empfänger geführt sind.

Die Gehäuse derartiger Lichtschrankenanordnungen bestehen aus Hohlprofilen, die insbesondere als aus Metall bestehende Stranggussprofile ausgebildet sein können. Die Optikelemente sind innerhalb diesem Hohlprofil angeordnet. Dabei liegen die Optikelemente im Innenraum der Hohlprofile hinter Durchbrüchen, die in die dem Überwachungsbereich zugewandte Frontwand des jeweiligen Hohlprofils eingearbeitet sind. Diese Durchbrüche sind notwendig um von den Optikelementen ausgehende Sendelichtstrahlen in den Überwachungsbereich führen zu können oder um aus dem Überwachungsbereich kommende Sendelichtstrahlen auf die jeweiligen Optikelemente führen zu können.

Nachteilig hierbei ist, dass das Einbringen der Durchbrüche in den Hohlprofilen einen zeitaufwändigen und kostenintensiven Arbeitsgang darstellt, der die Herstellkosten der Lichtschrankenanordnung in unerwünschter Weise erhöht. Typischerweise werden die Durchbrüche in die Hohlprofile eingefräst. Hierzu ist jeweils ein Einspannen und Ausrichten des Hohlprofils gegenüber dem Fräswerkzeug notwendig.

Ein weiterer Nachteil besteht darin, dass die Optikelemente zur Montage in die Hohlprofile eingeführt, dort ausgerichtet und schließlich in Sollpositionen fixiert werden müssen. Diese Montage ist zeitaufwändig und entsprechend kostenintensiv.

Aus der EP 0 369 386 A1 ist ein photoelektrischer Schalter bekannt, der eine Sendeeinheit und eine Empfangseinheit aufweist. Die Sendeeinheit weist eine Anzahl von lichtemittierenden Elementen als photoelektrische Elemente auf. Die Empfangseinheit weist eine Anzahl von lichtempfangenden Elementen als photoelektrischen Elementen auf. Die Sendeeinheit und die Empfangseinheit weisen denselben Aufbau auf und bestehe jeweils aus einer Relaiseinheit, einer Basiseinheit und einer Endeinheit. Die Basiseinheit weist einen unteren Basisabschnitt mit einem breiteren Gehäuseteil auf, in welchem photoelektrische Elemente hinter Durchbrüchen des Gehäuses gelagert. An diesen Basisabschnitt schließt ein Verbindungsabschnitt mit einem schmaleren Gehäuseteil an, wobei auch im Verbindungsabschnitt photoelektrische Elemente vorhanden sind. Die Relaiseinheit weist einen hohlen Gehäuseabschnitt und einen Verbindungsabschnitt wie die Basiseinheit auf. Die Endeinheit ist nur von einem hohlen Gehäuseabschnitt gebildete. Zur Montage des photoelektrischen Schalters wird der Verbindungsabschnitt der Baueinheit in den hohlen Gehäuseabschnitt der Relaiseinheit eingesteckt. Ebenso wird der Verbindungsabschnitt der Relaiseinheit in den hohlen Gehäuseabschnitt der Endeinheit eingesteckt. Dann liegen die photoelektrischen Elemente der Verbindungsabschnitte hinter Durchbrüchen der hohlen Gehäuseabschnitte.

Der Erfindung liegt die Aufgabe zugrunde eine Lichtschrankenanordnung der eingangs genannten Art bereitzustellen, welche rationell und kostengünstig herstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Lichtschrankenanordnung dient zur Erfassung von Objekten in einem Überwachungsbereich und umfasst zwei an gegenüberliegenden Enden des Überwachungsbereichs angeordnete Gehäuse zur Aufnahme von Optikelementen. Mit diesen Optikelementen wird eine vorgegebene Anzahl Strahlachsen generiert, welche jeweils von Sendelichtstrahlen gebildet sind, die von einem Gehäuse zum gegenüberliegenden Gehäuse geführt sind. Jedes Gehäuse weist einen Grundkörper auf, der von einem Hohlprofil gebildet ist. Die Öffnungen sind an den längsseitigen Enden der Hohlprofile mit jeweils einer Endkappe dicht abgeschlossen. Jede Endkappe bildet eine Optikelemente enthaltende Baugruppe, die als vormontierte Einheit gefertigt ist. Die Strahlachsen der Sendelichtstrahlen sind zwischen den Optikelementen in den Endkappen und in den äußersten Randbereichen der Gehäuse geführt.

Der Grundgedanke der Erfindung besteht somit darin, sowohl aktive Optikelemente wie Sender und Empfänger als auch passive Optikelemente wie Umlenkspiegel aus den vorzugsweise von Hohlprofilen gebildeten Grundkörpern der Gehäuse in die Endkappen der Gehäuse zu verlagern.

Dadurch wird einerseits erreicht, dass ein kostenintensives Einbringen von Durchbrüchen in die Hohlprofile der Gehäuse vermieden wird. Ein weiterer Rationalisierungseffekt ergibt sich dadurch, dass die in den Endkappen integrierten Optikelemente Baugruppen bilden, die als vormontierte Einheiten gefertigt sind Damit entfällt auch ein zeitaufwändiges Einführen, Positionieren und Fixieren derartiger Optikelemente innerhalb der Hohlprofile der Lichtschrankenanordnung. Für den Fall, dass ein aktives Optikelement in Form eines Senders in einer Endkappe integriert ist, kann in dieser zusätzlich eine Sendeoptik und ggf. sogar die Ansteuerelektronik zur Ansteuerung des Senders integriert sein, so dass die Endkappe eine komplette Funktionseinheit bildet. Ebenso kann eine solche Funktionseinheit von einer Endkappe gebildet sein, in welcher zusätzlich zu einem Empfänger eine Empfangsoptik zur Fokussierung der Sendelichtstrahlen auf den Empfänger und ggf. eine Auswerteelektronik mit Komponenten zur Auswertung der am Ausgang des Empfängers anstehenden Empfangssignale vorgesehen sind. Generell können sogar Spannungsversorgungen in den Endkappen dieser Funktionseinheiten integriert werden, so dass diese weitgehend vollständig funktionsfähige Einheiten bilden.

Ein weiterer Vorteil der erfindungsgemäßen Lichtschrankenanordnung besteht darin, dass durch die Verlagerung der Optikelemente in die Endkappen, die an den längsseitigen Rändern der Hohlprofile der Gehäuse aufsitzen, erreicht wird, dass die Strahlachsen der Sendelichtstrahlen die zwischen den Optikelementen in den Endkappen geführt sind, exakt in den äußersten Randbereichen der Gehäuse geführt werden können.

Dies ist bei herkömmlichen Lichtschrankenanordnungen, bei welchen die Optikelemente ausschließlich innerhalb der Hohlprofile angeordnet sind, prinzipiell nicht möglich. Dies beruht darauf, dass zur Ein- oder Ausleitung von Sendelichtstrahlen in die Innenräume der Hohlprofile, in welchen die Optikelemente gelagert sind, Durchbrüche in die Hohlprofile eingearbeitet werden müssen. Derartige Durchbrüche können jedoch nicht an den oberen Rändern der Hohlprofile ausmünden sondern müssen vollständig von Wandsegmenten des Hohlprofils umgeben sein.

Je nach Applikation der Lichtschrankenanordnung werden bestimmte Abstände der einzelnen Strahlachsen dieser Lichtschrankenanordnung gefordert. Bei der erfindungsgemäßen Lichtschrankenanordnung können die Gehäuselängen so dimensioniert werden, dass diese dem Abstand der beiden außenliegenden Strahlachsen der Lichtschrankenanordnung entsprechen. Die Gehäuse weisen somit jeweils eine minimale, an den Abstand der Strahlachsen angepasste Länge auf. Bei herkömmlichen Lichtschrankenanordnungen mit in die Hohlprofile eingearbeiteten Durchbrüchen ist dies nicht der Fall. Hier sind die Längen der Gehäuse stets größer als die Abstände der Strahlachsen, da an die Durchbrüche der Hohlprofile stets die Randsegmente der Hohlprofile anschließen, auf welche zudem noch Deckel zum Abschluss der längsseitigen Hohlprofil-Öffnungen aufgebracht werden müssen.

Durch die reduzierte Länge der Gehäuse der erfindungsgemäßen Lichtschrankenanordnung ergibt sich somit eine kompaktere Bauform, wobei besonders vorteilhaft ist, dass durch die reduzierte Länge der Hohlprofile eine erhebliche Materialeinsparung erzielt wird.

Bei zweistrahligen erfindungsgemäßen Systemen, d.h. Lichtschrankenanordnungen, bei welchen zwei Strahlachsen vorgesehen sind, können sämtliche Optikelemente in den Endkappen integriert sein. Damit müssen in diesem Fall in die die Grundkörper der Gehäuse bildenden Hohlprofilen überhaupt keine Durchbrüche eingearbeitet werden.

Bei mehrstrahligen erfindungsgemäßen Systemen, d.h. Lichtschrankenanordnungen, bei welchen drei oder mehr Strahlachsen vorgesehen sind, sind die Optikelemente für die beiden randseitigen Strahlachsen in den Endkappen integriert. Die Optikelemente für die restlichen Strahlachsen sind in den Hohlprofilen der Gehäuse integriert, d. h. für diese Strahlachsen müssen Durchbrüche in die Hohlprofile eingearbeitet werden müssen. Da gegenüber herkömmlichen Lichtschrankenanordnungen nur eine reduzierte Anzahl von Durchbrüchen notwenig ist, ergibt sich auch in diesem Fall ein signifikanter Rationalisierungseffekt.

Die Erfindung wird im Nachstehenden anhand der Zeichnungen erläutert. Es zeigen:
- Figur 1:: Erstes Ausführungsbeispiel einer Lichtschrankenanordnung
- Figur 2:: Zweites Ausführungsbeispiel einer Lichtschrankenanordnung
- Figur 3:: Drittes Ausführungsbeispiel einer Lichtschrankenanordnung
- Figur 4:: Viertes Ausführungsbeispiel einer Lichtschrankenanordnung

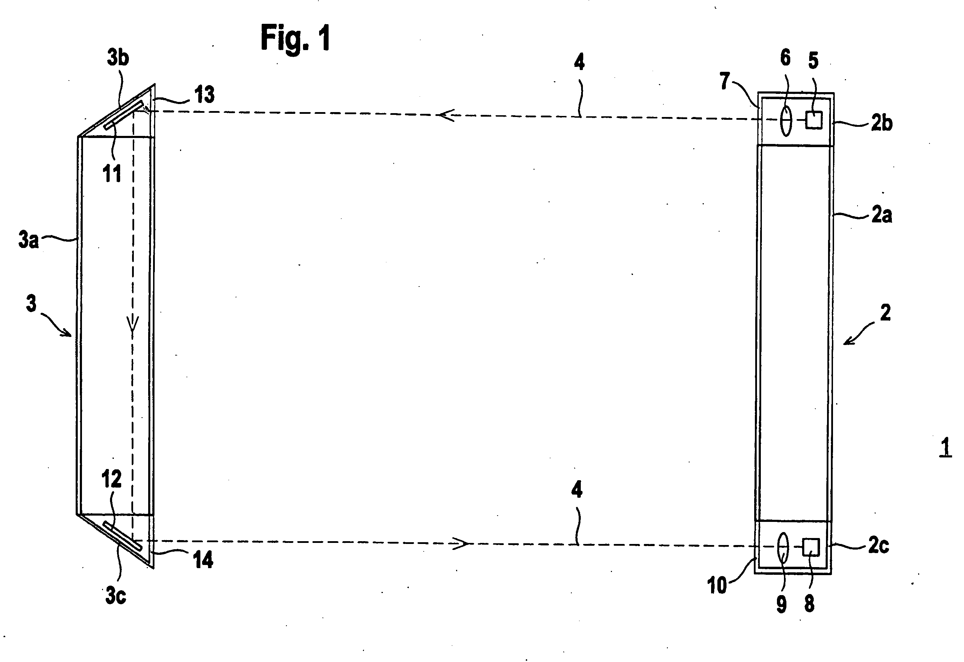

Figur 1 zeigt in einer schematischen Darstellung ein erstes Ausführungsbeispiel einer Lichtschrankenanordnung 1 zur Erfassung von Objekten in einem Überwachungsbereich. Die Lichtschrankenanordnung 1 umfasst Optikelemente, die in zwei Gehäusen 2, 3 integriert sind, welche beidseits des Überwachungsbereichs gegenüberliegend angeordnet sind. Das erste Gehäuse 2 besteht aus einem einen Grundkörper bildenden Hohlprofil 2a sowie zwei Endkappen 2b, 2c, die die Öffnungen an den längsseitigen Enden des Hohlprofils 2a abschließen. Ebenso besteht das zweite Gehäuse 3 aus einem Hohlprofil 3a, dessen Öffnungen an den längsseitigen Enden mit Endkappen 3b, 3c abgeschlossen sind.

Die Hohlprofile 2a, 3a beider Gehäuse 2, 3 sind identisch ausgebildet und weisen einen im wesentlichen über ihre Höhe konstanten rechteckigen oder quadratischen Querschnitt auf. Die Hohlprofile 2a, 3a bestehen aus Metall.

Die Endkappen 2b, 2c, 3b, 3c bestehen bevorzugt aus Metall oder ggf. aus Kunststoff und werden bevorzugt durch Rastmittel am jeweiligen Hohlprofil 2a, 3a fixiert. Dabei werden die Endkappen 2b, 2c, 3b, 3c mit ihren Unterseiten in die Öffnungen der Hohlprofile 2a, 3a eingesteckt. Die Endkappen 2b, 2c, 3b,3c bilden dabei einen dichten Abschluss der Öffnungen der Hohlprofile 2a, 3a.

In der Endkappe 2b an der Oberseite des ersten Gehäuses 2 ist als erstes aktives Optikelement der Lichtschrankenanordnung 1 ein Sendelichtstrahlen 4 emittierender Sender 5 integriert. Der Sender 5 ist beispielsweise von einer Leuchtdiode gebildet. Weiterhin ist in der Endkappe 2b eine dem Sender 5 nachgeordnete Sendeoptik 6 integriert. Die Sendeoptik 6 ist von einer Linse gebildet und dient zur Strahlformung der Sendelichtstrahlen 4. Der Sender 5 und die Sendeoptik 6 sind in nicht dargestellten Halterungen im Innenraum der Endkappe 2b gelagert. In der dem Überwachungsbereich zugewandten Frontwand der Endkappe 2b ist ein Fenster 7 in Form einer transparenten Kunststoffscheibe integriert, durch welche die Sendelichtstrahlen 4 geführt sind.

In der Endkappe 2c an der Unterseite des ersten Gehäuses 2 ist als zweites aktives Optikelement der Lichtschrankenanordnung 1 ein Empfänger 8 zum Empfang der Sendelichtstrahlen 4 integriert. Der Empfänger 8 besteht aus einer Photodiode oder dergleichen. Zur Fokussierung der Sendelichtstrahlen 4 auf den Empfänger 8 ist eine Empfangsoptik 9 vorgesehen, die von einer Linse gebildet ist. Entsprechend der ersten Endkappe 2b ist auch in der Frontwand der zweiten Endkappe 2c ein Fenster 10 in Form einer Kunststoffscheibe vorgesehen.

Die Endkappen 2b, 2c des ersten Gehäuses 2 weisen eine identische Form auf, wobei deren Querschnitt im wesentlichen dem Querschnitt des Hohlprofils 2a entspricht.

In dem Hohlprofil 2a des ersten Gehäuses 2 sind die elektronischen Komponenten zur Ansteuerung des Senders 5 und zur Auswertung der Empfangssignale am Ausgang des Empfängers 8 integriert. An die so ausgebildete Steuereinheit sind der Sender 5 und Empfänger 8 angeschlossen. Hierzu sind entsprechende Zuleitungen von der Steuereinheit zu dem Sender 5 und dem Empfänger 8 in den Endkappen 2b, 2c geführt. Alternativ kann in der Endkappe 2b eine Ansteuerelektronik für den Sender 5 und in der Endkappe 2c eine Auswerteelektronik zur Auswertung der Empfangssignale des Empfängers 8 integriert sein.

Die Endkappen 3b, 3c des zweiten Gehäuses 3 enthalten als passives Optikelement jeweils einen Umlenkspiegel 11, 12 zur Ablenkung der Sendelichtstrahlen 4. Die Ebenen der Umlenkspiegel 11, 12 verlaufen um 45° geneigt zur in vertikaler Richtung verlaufenden Längsachse des Gehäuses 3. Die Umlenkspiegel 11, 12 sind mittels nicht dargestellten Halterungen in den Innenräumen der Endkappen 3b, 3c lagefixiert. Die Konturen der Endkappen 3b, 3c des zweiten Gehäuses 3 sind identisch ausgebildet und an die Einbaulage der Umlenkspiegel 11, 12 angepasst. In den Frontwänden der Endkappen 3b, 3c sind wiederum von transparenten Kunststoffscheiben gebildete Fenster 13, 14 integriert.

Wie aus Figur 1 ersichtlich werden die vom Sender 5 emittierten Sendelichtstrahlen 4 über das Fenster 7 in den Überwachungsbereich geführt, durchsetzen den Überwachungsbereich ein erstes Mal und treffen dann auf den Umlenkspiegel 11 in der Endkappe 3b des zweiten Gehäuses 3. Dort werden die Sendelichtstrahlen 4 um 90° umgelenkt, so dass sie innerhalb des Hohlprofils 3a verlaufend zum Umlenkspiegel 12 in der Endkappe 3c geführt sind. Dort werden die Sendelichtstrahlen 4 nochmals um 90° umgelenkt, so dass diese den Überwachungsbereich in entgegengesetzter Richtung ein zweites Mal durchsetzen und dann zum Empfänger 8 geführt sind. Die gegenläufig im Überwachungsbereich geführten Sendelichtstrahlen 4 bilden zwei in Abstand parallel zueinander verlaufende Strahlachsen der Lichtschrankenanordnung 1. Die so ausgebildete Lichtschrankenanordnung 1 bildet ein sogenanntes zweistrahliges System.

Bei freiem Überwachungsbereich gelangen die vom Sender 5 emittierten Sendelichtstrahlen 4 ungehindert über die Umlenkspiegel 11, 12 zurück zum Empfänger 8. Dementsprechend wird in der Steuereinheit in Abhängigkeit der Empfangssignale, bevorzugt durch eine Schwellwertbewertung der Empfangssignale, ein Objektfeststellungssignal mit dem Schaltzustand "freier Überwachungsbereich" generiert.

Dringt ein Objekt in den Überwachungsbereich ein, so wird wenigstens eine Strahlachse unterbrochen. Dann wird in der Steuereinheit eine Objektmeldung, d.h. ein Objektfeststellungssignal mit dem Schaltzustand "Objekt erkannt" generiert. Das binäre Objektfeststellungssignal wird über einen nicht dargestellten Schaltausgang ausgegeben.

Die Lichtschrankenanordnung 1 ist insbesondere im Bereich der Sicherheitstechnik einsetzbar. Hierzu weist die Steuereinheit bevorzugt einen, redundanten zweikanaligen Aufbau zur Generierung eines sicheren Objektfeststellungssignals auf. Mit einer derartigen Lichtschrankenanordnung 1 kann ein Gefahrenbereich an einer Maschine oder dergleichen überwacht werden.

Zweckmäßigerweise wird der Betrieb der Maschine über die Lichtschrankenanordnung 1 derart gesteuert, dass deren Betrieb nur bei freiem Überwachungsbereich freigegeben wird, jedoch bei einem Objekteingriff in den Überwachungsbereich abgeschaltet wird. Hierzu wird das Objektfeststellungssignal an die Steuerung der Maschine ausgelesen.

Eine entsprechende Auswertung erfolgt für die weiteren, nachfolgenden Ausführungsbeispiele.

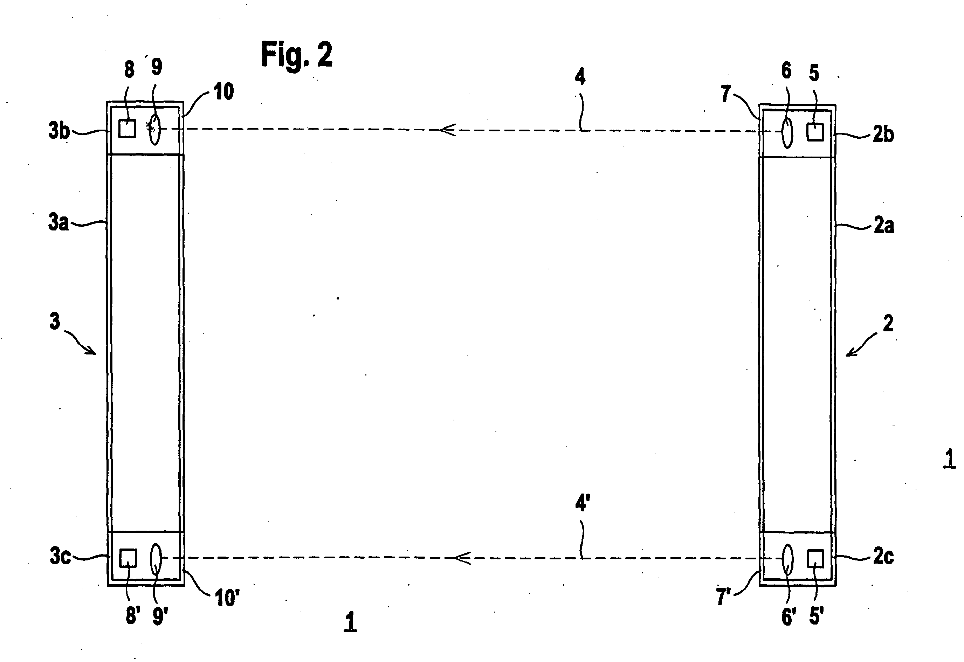

Figur 2 zeigt ein zweites Ausführungsbeispiel einer Lichtschrankenanordnung 1. Diese Lichtschrankenanordnung 1 ist analog zur Ausführungsform gemäß Figur 1 als zweistrahliges System ausgebildet, wobei in weiterer Überwachung mit der Ausführungsform gemäß Figur 1 sämtliche Optikelemente in den Endkappen 2b, 2c, 3b, 3c der beiden Gehäuse 2, 3 integriert sind.

Im Unterschied zur Ausführungsform gemäß Figur 1 sind bei dem Ausführungsbeispiel gemäß Figur 2 zur Ausbildung der beiden Stahlachsen nur aktive Optikelemente in den Endkappen 2b, 2c, 3b, 3c beider Gehäuse 2, 3 integriert. In den Endkappen 2b, 2c des ersten Gehäuses 2 sind jeweils ein Sender 5,5 und eine Sendeoptik 6,6' integriert. Die von den Sendern 5,5' emittierten Sendelichtstrahlen 4,4' werden jeweils durch ein Fenster 7,7' in der Frontwand der jeweiligen Endkappen 2b, 2c in den Überwachungsbereich geführt. Die Sender 5,5' werden von einer gemeinsamen, in dem Hohlprofil 2a integrierten Steuerelektronik angesteuert.

In den Endkappen 3b, 3c des zweiten Gehäuses 3 sind jeweils ein Empfänger 8,8' und eine Empfangsoptik 9,9' integriert, die hinter den Fenstern 10, 10' in den Frontwänden der Endkappen 3b, 3c angeordnet sind. Die Auswertung der Empfangssignale erfolgt in einer Auswerteeinheit, die im Hohlprofil 3a des zweiten Gehäuses 3 angeordnet ist.

Die Sendelichtstrahlen 4 des Senders 5 in der oberen Endkappe 2b des ersten Gehäuses 2 verlaufen im Überwachungsbereich und treffen auf den Empfänger 8 in der oberen Endkappe 3b des zweiten Gehäuses 3. Diese Sendelichtstrahlen 4 bilden die erste Strahlachse der Lichtschrankenanordnung 1. Die Sendelichtstrahlen 4' des Senders 5' in der unteren Endkappe 2c des ersten Gehäuses 2 verlaufen im Überwachungsbereich und treffen auf den Empfänger 8' in der unteren Endkappe 3c des zweiten Gehäuses 3. Diese Sendelichtstrahlen 4' bilden die zweite Strahlachse der Lichtschrankenanordnung 1. Eine Objektmeldung wird generiert, wenn wenigstens eine Strahlachse durch einen Objekteingriff unterbrochen ist.

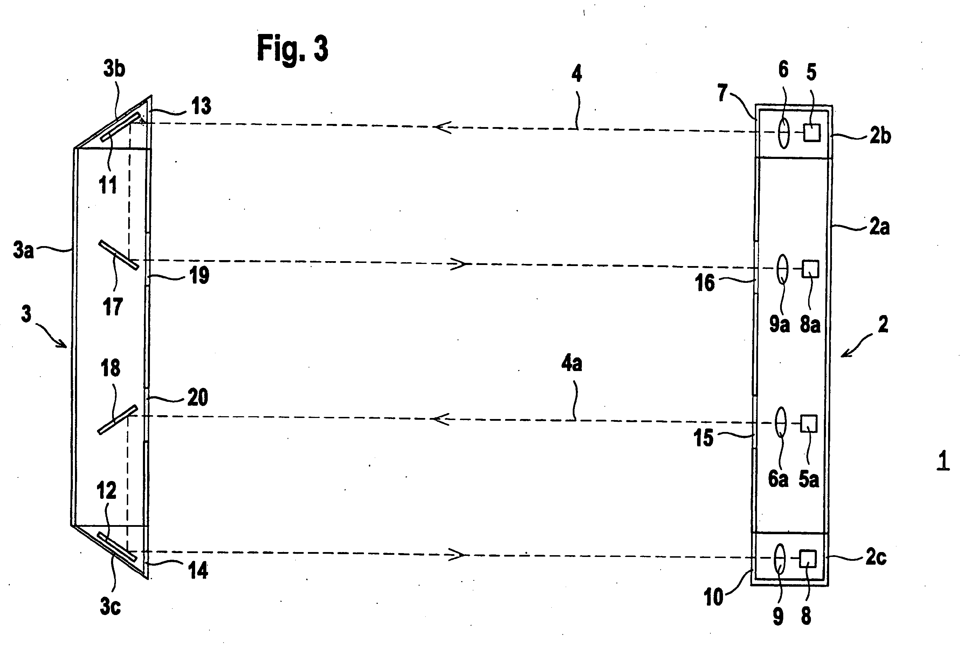

Figur 3 zeigt eine Erweiterung der Ausführungsform gemäß Figur 1 zu einem vierstrahligen System. Die Lichtschrankenanordnung 1 gemäß Figur 3 ist hinsichtlich der Ausbildung der Endkappen 2b, 2c, 3b, 3c und der darin angeordneten Optikelemente identisch mit der Ausführungsform gemäß Figur 1.

In Erweiterung zur Ausführungsform gemäß Figur 1 sind bei der Lichtschrankenanordnung 1 gemäß Figur 3 in den Hohlprofilen 2a, 3a der beiden Gehäuse 2, 3 zusätzliche Optikelemente integriert.

In dem Hohlprofil 2a des ersten Gehäuses 2 sind ein zweiter Empfänger 8a mit vorgeordneter Empfangsoptik 9a und ein zweiter Sender 5a mit vorgeordneter Sendeoptik 6a vorgesehen. Der zweite Sender 5a ist dem ersten Empfänger 8 zugeordnet. Der zweite Sender 5a liegt hinter einem Fenster 15, das in einem Durchbruch in der Frontwand des Hohlprofils 2a integriert ist. Der zweite Empfänger 8a liegt hinter einem weiteren Fenster 16 das ebenfalls in einem Durchbruch in der Frontwand des Hohlprofils 2a integriert ist.

In dem Hohlprofil 3a des zweiten Gehäuses 3 sind als weitere Optikelemente zwei weitere Umlenkspiegel 17, 18 vorgesehen, deren Spiegelebenen um 45° zur Längsachse des Gehäuses 3 geneigt sind. Die Umlenkspiegel 17, 18 liegen jeweils hinter einem Fenster 19, 20 welche jeweils in Durchbrüchen in der Frontwand des Hohlprofils 3a angeordnet sind.

Bei freiem Strahlengang durchsetzen die vom ersten Sender 5 emittierten Sendelichtstrahlen 4 den Überwachungsbereich, treffen dann auf den Umlenkspiegel 11 und werden dort so abgelenkt, dass sie im Hohlprofil 3a verlaufend zum Umlenkspiegel 17 geführt sind. An diesem Umlenkspiegel 17 werden die Sendelichtstrahlen 4 so abgelenkt, dass diese in entgegengesetzter Richtung den Überwachungsbereich nochmals durchsetzen und auf den zweiten Empfänger 8a geführt sind. Die Sendelichtstrahlen 4 bilden somit die ersten beiden Strahlachsen der Lichtschrankenanordnung 1.

Entsprechend durchsetzen die vom zweiten Sender 5a emittierten Sendelichtstrahlen 4a den Überwachungsbereich, treffen dann auf den Umlenkspiegel 18 und werden dort so abgelenkt, dass sie im Hohlprofil 3a verlaufend zum Umlenkspiegel 12 geführt sind. An diesem Umlenkspiegel 12 werden die Sendelichtstrahlen 4a so abgelenkt, dass diese in entgegengesetzter Richtung den Überwachungsbereich nochmals durchsetzen und auf den ersten Empfänger 8 geführt sind. Die Sendelichtstrahlen 4a bilden somit die dritte und vierte Strahlachse der Lichtschrankenanordnung 1.

Eine Objektmeldung erfolgt wiederum dann, wenn durch einen Objekteingriff wenigstens eine Strahlachse der Lichtschrankenanordnung 1 unterbrochen ist.

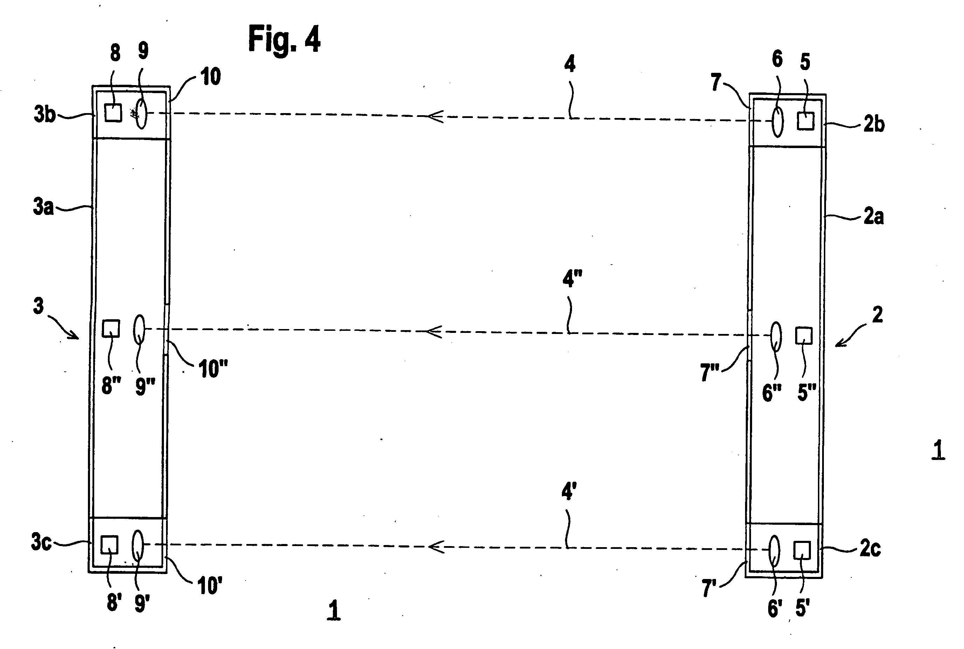

Figur 4 zeigt eine Erweiterung der Ausführungsform gemäß Figur 2 zu einem dreistrahligen System. Die Lichtschrankenanordnung 1 gemäß Figur 4 ist hinsichtlich der Ausbildung der Endkappen 2b, 2c, 3b, 3c und der darin angeordneten Optikelemente identisch mit der Ausführungsform gemäß Figur 2.

In Erweiterung der Ausführungsform gemäß Figur 2 sind bei der Lichtschrankenanordnung 1 gemäß Figur 4 in den Hohlprofilen 2a, 3a der beiden Gehäuse 2, 3 zusätzliche Optikelemente integriert.

In dem Hohlprofil 2a des ersten Gehäuses 2 ist ein dritter Sender 5" mit vorgeordneter Sendeoptik 6" integriert. Der Sender 5" ist hinter einem Fenster 7" in einem Durchbruch der Frontwand des Hohlprofils 2a angeordnet.

In dem Hohlprofil 3a des zweiten Gehäuses 3 ist ein dritter Empfänger 8" mit vorgeordneter Empfangsoptik 7" integriert. Der Empfänger 8" ist hinter einem Fenster 10" in einem Durchbruch der Frontwand der Hohlprofils 3b angeordnet.

Die vom Sender 5" emittierten und zum Empfänger 8" geführten Sendelichtstrahlen 4" bilden die dritte Strahlachse der Lichtschrankenanordnung 1 zusätzlich zu den Strahlachsen, die von den Sendelichtstrahlen 4, 4", welche von den Sendern 5, 5" in den Endkappen 2b, 2c emittiert werden.

### Bezugszeichenliste

- (1): Lichtschrankenanordnung
- (2): Gehäuse
- (3): Gehäuse
- (4): Sendelichtstrahlen
- (4a): Sendelichtstrahlen
- (4"): Sendelichtstrahlen
- (5): Sender
- (5a): Sender
- (5'): Sender
- (5"): Sender
- (6): Sendeoptik
- (6a): Sendeoptik
- (6'): Sendeoptik
- (6"): Sendeoptik
- (7): Fenster
- (7'): Fenster
- (7"): Fenster
- (8): Empfänger
- (8a): Empfänger
- (8'): Empfänger
- (8"): Empfänger
- (9): Empfangsoptik
- (9a): Empfangsoptik
- (9'): Empfangsoptik
- (9"): Empfangsoptik
- (10): Fenster
- (10'): Fenster
- (10"): Fenster
- (11): Umlenkspiegel
- (12): Umlenkspeigel
- (13): Fenster
- (14): Fenster
- (15): Fenster
- (16): Fenster
- (17): Umlenkspiegel
- (18): Umlenkspiegel
- (19): Fenster
- (20): Fenster

## Patentansprüche

1. Lichtschrankenanordnung (1) zur Erfassung von Objekten in einem Überwachungsbereich, mit zwei an gegenüberliegenden Enden des Überwachungsbereichs angeordneten Gehäusen (2, 3) zur Aufnahme von Optikelementen, mittels derer eine vorgegebene Anzahl Strahlachsen generiert wird, welche jeweils von Sendelichtstrahlen (4, 4') gebildet sind, die von einem Gehäuse (2) zum gegenüberliegenden Gehäuse (3) geführt sind, **dadurch gekennzeichnet, dass** jedes Gehäuse (2) einen Grundkörper aufweist, der von einem Hohlprofil (2a, 3a) gebildet ist, dass die Öffnungen an den längsseitigen Enden der Hohlprofile (2a, 3a) mit jeweils einer Endkappe (2b, 2c, 3b, 3c) dicht abgeschlossen sind, dass jede Endkappe (2b, 2c, 3b, 3c) eine Optikelemente enthaltende Baugruppe bildet, die als vormontierte Einheit gefertigt ist, und dass die Strahlachsen der Sendelichtstrahlen (4, 4'), die zwischen den Optikelementen in den Endkappen (2b und 3b bzw. 2c und 3c) geführt sind, in den äußersten Randbereichen der Gehäuse (2, 3) geführt sind.

2. Lichtschrankenanordnung (1) nach Anspruch 1, **dadurch gekennzeichnet, dass** wenigstens ein Optikelement von einem Sendelichtstrahlen (4, 4a, 4', 4") emittierenden Sender (5, 5a, 5', 5") gebildet ist.

3. Lichtschrankenanordnung (1) nach Anspruch 2, **dadurch gekennzeichnet, dass** der Sender (5, 5') mit einer vorgeordneten Sendeoptik (6, 6') in einer Endkappe (2b, 2c) integriert ist.

4. Lichtschrankenanordnung (1) nach einem der Ansprüche 2 oder 3, **dadurch gekennzeichnet, dass** in der den Sender (5, 5') aufnehmenden Endkappe (2b, 2c) eine Ansteuerelektronik für den Sender (5, 5') integriert ist.

5. Lichtschrankenanordnung (1) nach einem der Ansprüche 1 bis 4, **dadurch gekennzeichnet, dass** wenigstens ein Optikelement von einem Sendelichtstrahlen (4, 4a, 4', 4") empfangenden Empfänger (8, 8a, 8', 8") gebildet ist.

6. Lichtschrankenanordnung (1) nach Anspruch 5, **dadurch gekennzeichnet, dass** der Empfänger (8, 8') mit einer vorgeordneten Empfangsoptik (9, 9') in einer Endkappe (2c, 3b, 3c) integriert ist.

7. Lichtschrankenanordnung (1) nach einem der Ansprüche 5 oder 6, **dadurch gekennzeichnet, dass** in der den Empfänger (8, 8a, 8', 8") aufnehmenden Endkappe (2c, 3b, 3c) eine Auswerteelektronik integriert ist.

8. Lichtschrankenanordnung (1) nach einem der Ansprüche 1 bis 7, **dadurch gekennzeichnet, dass** als Optikelement ein Umlenkspiegel (11, 12, 17, 18) vorgesehen ist.

9. Lichtschrankenanordnung (1) nach einem der Ansprüche 1 bis 8, **dadurch gekennzeichnet, dass** sämtliche Optikelemente in den Endkappen (2b, 2c, 3b, 3c) der Gehäuse (2, 3) integriert sind.

10. Lichtschrankenanordnung (1) nach einem der Ansprüche 1 bis 8, **dadurch gekennzeichnet, dass** zusätzlich in den in den Endkappen (2b, 2c, 3b, 3c) angeordneten Optikelementen weitere Optikelemente in den Grundkörpern der Gehäuse (2, 3) vorgesehen sind.

11. Lichtschrankenanordnung (1) nach Anspruch 9, **dadurch gekennzeichnet, dass** in den Grundkörpern Durchbrüche eingearbeitet sind, hinter welchen
die Optikelemente angeordnet sind, wobei die Sendelichtstrahlen (4, 4a, 4', 4") durch die Durchbrüche geführt sind.

12. Lichtschrankenanordnung (1) nach einem der Ansprüche 1 bis 11, **dadurch gekennzeichnet, dass** die die Grundkörper bildenden Hohlprofile (2a, 3a) aus Metall bestehen.

13. Lichtschrankenanordnung (1) nach einem der Ansprüche 1 bis 12, **dadurch gekennzeichnet, dass** die Endkappen (2b, 2c, 3b, 3c) aus Metall und/oder Kunststoff besehen.

14. Lichtschrankenanordnung (1) nach einem der Ansprüche 1 bis 13, **dadurch gekennzeichnet, dass** in deren erstem Gehäuse (2) Sender (5, 5', 5") als Optikelemente und in deren zweitem Gehäuse (3) Empfänger (8, 8', 8") als Optikelemente vorgesehen sind, wobei die von jeweils einem Sender (5, 5', 5") emittierten Sendelichtstrahlen (4, 4', 4") zu einem zugeordneten Empfänger (8, 8', 8") geführt sind.

15. Lichtschrankenanordnung (1) nach einem der Ansprüche 1 bis 14, **dadurch gekennzeichnet, dass** in deren erstem Gehäuse (2) als Optikelement wenigstens ein Sender (5) und ein Empfänger (8) vorgesehen sind und in deren zweitem Gehäuse (3) als Optikelement wenigstens zwei Umlenkspiegel (11, 12) vorgesehen sind, wobei die vom Sender (5) emittierten Sendelichtstrahlen (4) entlang einer ersten Strahlachse verlaufend ein erstes Mal im Überwachungsbereich geführt sind, dann auf einen ersten Umlenkspiegel (11) treffen und dort so umgelenkt werden, dass diese im Gehäuse (2) verlaufend zum zweiten Umlenkspiegel (12) geführt werden und dort so umgelenkt werden, dass diese entlang einer zweiten Strahlachse verlaufend ein zweites Mal den Überwachungsbereich passieren und zum Empfänger (8) geführt werden.

16. Lichtschrankenanordnung (1) nach Anspruch 15, **dadurch gekennzeichnet, dass** in deren erstem Gehäuse (2) zwei Paare eines Senders (5, 5a) und Empfängers (8, 8a) und in deren zweitem Gehäuse (3) zwei Paare von Umlenkspiegeln (11, 12, 17, 18) angeordnet sind, wobei dem Sender (5) und Empfänger (8) des ersten Paares das erste Paar von Umlenkspiegeln (11, 17) und dem Sender (5a) und Empfänger (8a) des zweiten Paares das zweite Paar von Umlenkspiegeln (12, 18) zugeordnet sind.

## Claims

1. Light barrier arrangement (1) for detection of objects in a monitoring region, with two housings (2, 3), which are arranged at opposite ends of the monitoring region, for reception of optical elements, by means of which a predetermined number of beam axes is generated, the axes being respectively formed by transmitted light beams (4, 4') guided from one housing (2) to the opposite housing (3), **characterised in that** each housing (2) comprises a base body formed by a hollow section (2a, 3a), that the openings at the ends of the hollow sections (2a, 3a) at the longitudinal side are each tightly closed by a respective end cap (2b, 2c, 3b, 3c), that each end cap (2b, 2c, 3b, 3c) forms a subassembly which contains an optical element and is produced as a preassembled unit, and that the beam axes of the transmitted light beams (4, 4'), which are guided between the optical elements in the end caps (2b and 3b or 2c and 3c), are guided in the outermost edge regions of the housing (2, 3).

2. Light barrier arrangement (1) according to claim 1, **characterised in that** at least one optical element is formed by a transmitter (5, 5a, 5', 5") emitted transmitted light beams (4, 4a, 4', 4").

3. Light barrier arrangement (1) according to claim 2, **characterised in that** the transmitter (5, 5') together with an upstream transmission optical system (6, 6') is integrated in an end cap (2b, 2c).

4. Light barrier arrangement (1) according to one of claims 2 and 3, **characterised in that** an electronic drive system for the transmitter (5, 5') is integrated in the end cap (2b, 2c) receiving the transmitter (5, 5').

5. Light barrier arrangement (1) according to any one of claims 1 to 4, **characterised in that** at least one optical element is formed by a receiver (8, 8a, 8', 8") receiving transmitted light beams (4, 4a, 4', 4").

6. Light barrier arrangement (1) according to claim 5, **characterised in that** the receiver (8, 8') together with an upstream receiving optical system (9, 9') is integrated in an end cap (2c, 3b, 3c).

7. Light barrier arrangement (1) according to one of claims 5 and 6, **characterised in that** an electronic evaluating system is integrated in the end cap (2c, 3b, 3c) receiving the receiver (8, 8a, 8', 8").

8. Light barrier arrangement (1) according to any one of claims 1 to 7, **characterised in that** a deflecting mirror (11, 12, 17, 18) is provided as optical element.

9. Light barrier arrangement (1) according to any one of claims 1 to 8, **characterised in that** all optical elements are integrated in the end caps (2b, 2c, 3b, 3c) of the housing (2, 3).

10. Light barrier arrangement (1) according to any one of claims 1 to 8, **characterised in that** in addition to the optical elements arranged in the end caps (2b, 2c, 3b, 3c) further optical elements are provided in the base bodies of the housings (2, 3).

11. Light barrier arrangement (1) according to claim 9, **characterised in that** passages behind which the optical elements are arranged are formed in the base bodies, wherein the transmitted light beams (4, 4a, 4', 4") are guided through the passages.

12. Light barrier arrangement (1) according to any one of claims 1 to 11, **characterised in that** the hollow sections (2a, 3a) forming the base bodies consist of metal.

13. Light barrier arrangement (1) according to any one of claims 1 to 12, **characterised in that** the end caps (2b, 2c, 3b, 3c) consist of metal and/or plastics material.

14. Light barrier arrangement (1) according to any one of claims 1 to 13, **characterised in that** transmitters (5, 5', 5") are provided as optical elements in the first housing (2) thereof and receivers (8, 8', 8") are provided as optical elements in the second housing (3) thereof, wherein the transmitted light beams (4, 4', 4") emitted by each transmitter (5, 5', 5") are guided to an associated receiver (8, 8', 8").

15. Light barrier arrangement (1) according to any one of claims 1 to 14, **characterised in that** at least one transmitter (5) and receiver (8) are provided as optical element in the first housing (2) thereof and at least two deflecting mirrors (11, 12) are provided as optical element in the second housing (3) thereof, wherein the transmitted light beams (4) emitted by the transmitter (5) are guided a first time extending along a first beam axis in the monitoring region, then are incident on a first deflecting mirror (11) and so deflected thereat that these are guided, running in the housing (2), to the second deflecting mirror (12) and so deflected thereat that these running along a second beam axis pass the monitoring region a second time and are guided to the receiver (8).

16. Light barrier arrangement (1) according to claim 15, **characterised in that** two pairs of a transmitter (5, 5a) and receiver (8, 8a) are arranged in the first housing (2) thereof and two pairs of deflecting mirrors (11, 12, 17, 18) are arranged in the second housing (3) thereof, wherein the first pair of deflecting mirrors (11, 17) is associated with the transmitter (5) and receiver (8) of the first pair and the second pair of deflecting mirrors (12, 18) is associated with the transmitter (5a) and receiver (8a) of the second pair.

## Revendications

1. Arrangement de barrière lumineuse (1) pour la détection d'objets dans une zone de surveillance, avec deux boîtiers (2, 3) disposés à des extrémités opposées de la zone de surveillance pour la réception d'éléments optiques au moyen desquels un nombre prédéfini d'axes de faisceau est généré, lesquels sont chaque fois formés de faisceaux lumineux d'émission (4, 4') qui sont guidés d'un boîtier (2) vers le boîtier opposé (3), **caractérisé en ce que** chaque boîtier (2) présente un corps de base qui est formé par un profilé creux (2a, 3a), que les ouvertures aux extrémités longitudinales des profilé creux (2a, 3a) sont hermétiquement fermées chaque fois par un capuchon d'extrémité (2b, 2c, 3b, 3c), que chaque capuchon d'extrémité (2b, 2c, 3b, 3c) forme un module contenant des éléments optiques, qui est réalisé sous la forme d'une unité préassemblée, et que les axes de faisceau des faisceaux lumineux d'émission (4, 4') qui sont guidés entre les éléments optiques dans les capuchons d'extrémité (2b et 3b, respectivement 2c et 3c) sont guidés dans les zones de bord les plus extérieures des boîtiers (2, 3).

2. Arrangement de barrière lumineuse (1) selon la revendication 1, **caractérisé en ce qu'**au moins un élément optique est formé par un émetteur (5, 5a, 5', 5") émettant des faisceaux lumineux d'émission (4, 4a, 4', 4").

3. Arrangement de barrière lumineuse (1) selon la revendication 2, **caractérisé en ce que** l'émetteur (5, 5') est intégré dans un capuchon d'extrémité (2b, 2c) avec une optique d'émission (6, 6') placée en amont.

4. Arrangement de barrière lumineuse (1) selon une des revendications 2 ou 3, **caractérisé en ce qu'**une électronique de commande pour l'émetteur (5, 5') est intégrée dans le capuchon d'extrémité (2b, 2c) recevant l'émetteur (5, 5').

5. Arrangement de barrière lumineuse (1) selon une des revendications 1 à 4, **caractérisé en ce qu'**au moins un élément optique est formé par un récepteur (8, 8a, 8', 8") recevant des faisceaux lumineux d'émission (4, 4a, 4', 4").

6. Arrangement de barrière lumineuse (1) selon la revendication 5, **caractérisé en ce que** le récepteur (8, 8') est intégré dans un capuchon d'extrémité (2c, 3b, 3c) avec une optique de réception (9, 9') placée en amont.

7. Arrangement de barrière lumineuse (1) selon une des revendications 5 ou 6, **caractérisé en ce qu'**une électronique d'évaluation est intégrée dans le capuchon d'extrémité (2c, 3b, 3c) recevant le récepteur (8, 8a, 8', 8").

8. Arrangement de barrière lumineuse (1) selon une des revendications 1 à 7, **caractérisé en ce qu'**un miroir de déviation (11, 12, 17, 18) est prévu comme élément optique.

9. Arrangement de barrière lumineuse (1) selon une des revendications 1 à 8, **caractérisé en ce que** tous les éléments optiques sont intégrés dans les capuchons d'extrémité (2b, 2c, 3b, 3c) des boîtiers (2, 3).

10. Arrangement de barrière lumineuse (1) selon une des revendications 1 à 8, **caractérisé en ce que** d'autres éléments optiques sont prévus dans les corps de base des boîtiers (2, 3) en plus des éléments optiques disposés dans les capuchons d'extrémité (2b, 2c, 3b, 3c).

11. Arrangement de barrière lumineuse (1) selon la revendication 9, **caractérisé en ce que** des ouvertures sont pratiquées dans les corps de base, derrière lesquelles les éléments optiques sont disposés, les faisceaux lumineux d'émission (4, 4a, 4', 4") étant guidés à travers les ouvertures.

12. Arrangement de barrière lumineuse (1) selon une des revendications 1 à 11, **caractérisé en ce que** les profilés creux (2a, 3a) formant les corps de base sont en métal.

13. Arrangement de barrière lumineuse (1) selon une des revendications 1 à 12, **caractérisé en ce que** les capuchons d'extrémité (2b, 2c, 3b, 3c) sont en métal et/ou en matière plastique.

14. Arrangement de barrière lumineuse (1) selon une des revendications 1 à 13, **caractérisé en ce que** des émetteurs (5, 5', 5") sont prévus en tant qu'éléments optiques dans son premier boîtier (2) et des récepteurs (8, 8', 8") en tant qu'éléments optiques dans son deuxième boîtier (3), les faisceaux lumineux d'émission (4, 4', 4") respectivement émis par un émetteur (5, 5', 5") étant guidés vers un récepteur (8, 8', 8") associé.

15. Arrangement de barrière lumineuse (1) selon une des revendications 1 à 14, **caractérisé en ce qu'**au moins un émetteur (5) et un récepteur (8) sont prévus en tant qu'éléments optiques dans son premier boîtier (2) et au moins deux miroirs de déviation (11, 12) en tant qu'éléments optiques dans son deuxième boîtier (3), les faisceaux lumineux d'émission (4) émis par l'émetteur (5) étant guidés une première fois dans la zone de surveillance suivant un premier axe de faisceau, rencontrant ensuite un premier miroir de déviation (11) et étant déviés par celui-ci de façon à être guidés dans le boîtier (2) vers le deuxième miroir de déviation (12) et étant déviés par celui-ci de façon à passer une deuxième fois dans la zone de surveillance suivant un deuxième axe de faisceau et à être guidés vers le récepteur (8).

16. Arrangement de barrière lumineuse (1) selon la revendication 15, **caractérisé en ce que** deux paires d'un émetteur (5, 5a) et d'un récepteur (8, 8a) sont disposées dans son premier boîtier (2) et deux paires de miroirs de déviation (11, 12, 17, 18) dans son deuxième boîtier (3), la première paire de miroirs de déviation (11, 17) étant associée à l'émetteur (5) et au récepteur (8) de la première paire et la deuxième paire de miroirs de déviation (12, 18) à l'émetteur (5a) et au récepteur (8a) de la deuxième paire.
